(19) Europäisches Patentamt
European Patent Office
Office européen des brevets

(11) Veröffentlichungsnummer: **0 640 564 A1**

(12) # EUROPÄISCHE PATENTANMELDUNG

(21) Anmeldenummer: **94112388.7**

(51) Int. Cl.[6]: **C01B 33/158**

(22) Anmeldetag: **08.08.94**

(30) Priorität: **19.08.93 DE 4327965**

(43) Veröffentlichungstag der Anmeldung:
**01.03.95 Patentblatt 95/09**

(84) Benannte Vertragsstaaten:
**AT CH DE LI NL SE**

(71) Anmelder: **SIEMENS AKTIENGESELLSCHAFT**
**Wittelsbacherplatz 2**
**D-80333 München (DE)**

(72) Erfinder: **Gerlach, Rudolph**
**Leistenstrasse 2**
**D-97082 Würzburg (DE)**
Erfinder: **Fricke, Jochen**
**Grieshügelerstrasse 63**
**D-97218 Gerbrunn (DE)**
Erfinder: **Mágori, Valentin**
**Limburgstrasse 17**
**D-81539 München (DE)**

(54) **Verfahren zur Herstellung eines hydrophoben Aerogels.**

(57) Für ein verbessertes hydrophob eingestelltes Aerogel wird vorgeschlagen, eine entsprechend hydrophob eingestellt Alkoxisilanmischung unter Einwirkung eines Ultraschallfeldes basisch katalysiert zu hydrolysieren und das erhaltene Naßgel überkritisch zu trocknen. So erhaltene Aerogele weisen eine Impedanz von ca. $10^5$ kg/m$^2$s auf, die dem optimalen Wert der Impedanzanpassungsschicht eines Ultraschallwandlers entspricht.

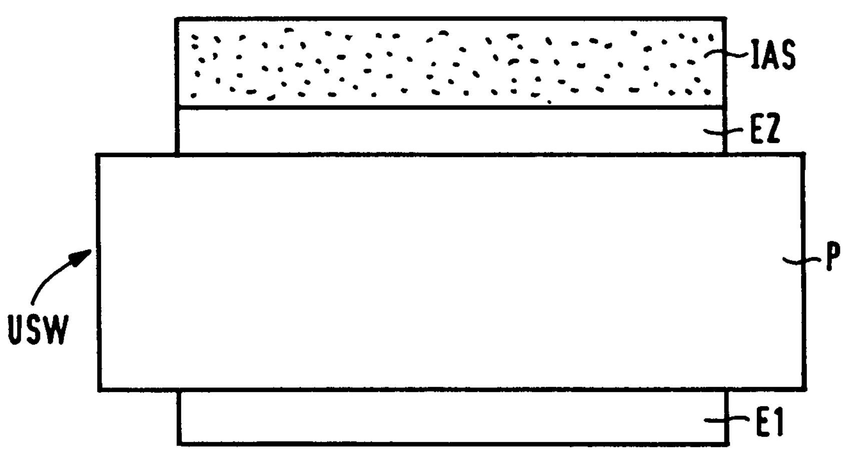


EP 0 640 564 A1

Rank Xerox (UK) Business Services
(3.10/3.09/3.3.4)

Aerogele sind Festkörper mit extrem poröser Struktur. Erhalten werden sie durch Trocknen von Naßgelen unter Beibehaltung der räumlichen Struktur des ursprünglich Wasser oder Lösungsmittel enthaltenden Festkörpergerüsts. Aerogele wurden bereits auf der Basis der Oxide von Silizium, Eisen, Wolfram und Aluminium hergestellt.

Aerogele können vollständig transparent hergestellt werden und erreichen wegen ihrer hohen Porösität niedrige Dichten von bis 30 kg pro $m^3$. Neben ihrer aufgrund der niedrigen Dichte resultierenden niedrigen Wärmeleitfähigkeit zeigt sich in ihnen eine extrem niedrige Schallgeschwindigkeit, die im Produkt mit der Dichte zu einer extrem niedrigen Impedanz der Aerogele führt. Da diese zwischen der Impedanz von Luft und von Piezokeramik liegt, sind Aerogele zur Verwendung als akustische Anpassungsschicht ($\lambda$/4-Schicht) auf Ultraschallwandlern vorgeschlagen worden.

Zur Herstellung von Aerogelen auf $SiO_2$-Basis ist es bekannt, durch sauer katalysierte Hydrolyse von geeigneten Siliziumverbindungen ein entsprechendes Naßgel zu erzeugen und dieses schließlich überkritisch in einem Autoklaven zu trocknen. Nachteilig an diesem Verfahren ist es, daß die saure Katalyse zu einem fadenartig vernetzten Gel führt, welches bei der Trocknung schrumpft. Wird das entsprechende Gel nicht durch eine sauer, sondern basisch katalysierte Hydrolyse hergestellt, so ergibt sich eine gröbere und damit stabilere Struktur der Primärteilchen, welche sich hernach zu dem Gel vernetzen. Die Schrumpfung im Autoklavenprozeß kann so weitgehend verhindert werden.

Ein beiden Verfahren anhaftender Nachteil ist die Tatsache, daß die so gewonnenen Aerogele eine hydrophile Oberfläche besitzen.

Es ist auch möglich, basisch katalysiertes hydrophobes Aerogel im Dichtebereich von 100 bis ca. 250 kg/$m^3$ herzustellen. Hierzu werden Tetramethoxisilan (TMOS, $(CH_3O)_4$ Si), Methyltrimethoxisilan (METMOS, $(CH_3O)_3CH_3Si$) und Wasser im stöchiometrisch richtigen Verhältnis gemischt. Als Verdünnungsmittel dient Methanol und als Katalysator Ammoniak. Das entstehende Naßgel wird nach Durchlaufen eines Alterungsprozesses in einem Autoklaven überkritisch getrocknet. Das so hergestellte Aerogel ist mechanisch jedoch nur sehr gering belastbar. Die akustischen Impedanzen liegen unter den Werten, die das Material für akustische Anwendungen interessant machen würden. Infolge der geringen Löslichkeit von TMOS in Wasser ist eine einfache Erhöhung der Dichte (und damit der akustischen Impedanz) durch eine Verdünnung im Lösungsmittel Methanol nicht möglich.

Aufgabe der vorliegenden Erfindung ist es daher, ein Herstellverfahren anzugeben, mit dem ein Aerogel einer geeigneten Dichte von 280 kg/$m^3$ und mehr erzeugt werden kann, welches mechanisch stabil und unempfindlich gegen Wasser ist, und welches daher zur Verwendung als akustische Anpassungsschicht auf Ultraschallwandlern geeignet ist.

Diese Aufgabe wird erfindungsgemäß durch ein Verfahren mit den Merkmalen von Anspruch 1 gelöst. Weitere Ausgestaltungen der Erfindung sowie ein danach hergestelltes Aerogel mit neuen bislang nicht erhaltenen Eigenschaften sind weiteren Ansprüchen zu entnehmen.

Zur Herstellung des erfindungsgemäßen Aerogels wird ein Gemisch der Alkoxisilane A und eingesetzt

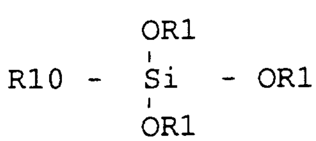

A

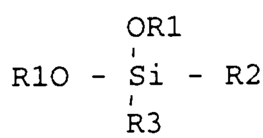

B

wobei R1 ein Alkylrest mit 1 bis 6 C-Atomen ist, R2 ein hydrophober Rest, ausgewählt aus Alkyl oder Aryl ist und R3 für -OR1 oder R2 steht.

Das erfindungsgemäße Aerogel ist im Vergleich zu dem bekannten hydrophoben, basisch-katalysierten bekannten Material mechanisch sehr viel stabiler. Es besitzt eine akustische Impedanz, die in etwa im geometrischen Mittel zwischen der Impedanz einer Piezokeramik und der Impedanz von Luft liegt. Dies ist die theoretisch ideale Impedanz, welche eine Lambda-Viertel-Schicht zur Anpassung zweier unterschiedlicher Medien haben sollte. Durch leichte Variation des Ansatzes zur Herstellung des Naßgels kann die Impedanz in einfacher Weise an die verschiedenen Keramikwandlertypen angepaßt werden.

Die Struktur des Naßgels ist kolloidal und bleibt bei der Trocknung unverändert erhalten. So läßt sich ein Aerogel mit über die Struktur gleichmäßiger Dichte und damit gleichmäßiger Impedanz reproduzierbar herstellen. Durch den Einfluß des Ultraschallfeldes läßt sich eine stabile Emulsion der eingesetzten

Alkoxisilane, dem Wasser und dem eingesetzten Katalysator erreichen. Dabei kann der Anteil des SiC-Bindungen enthaltenden Alkylsilans B stärker als in bekannten Verfahren erhöht werden, wodurch sich eine deutliche Erhöhung der Dichte ergibt. Desweiteren wird durch das Ultraschallfeld auch der Verlauf der Hydrolyse und der anschließenden Vernetzung in nicht erwarteter Weise positiv beeinflußt. Während in bekannten Verfahren das dem Alkylsilan B entsprechende METMOS aufgrund einer geringeren Reaktionsgeschwindigkeit gegenüber der Hydrolyse erst am Ende der Gelierungsphase reagiert und so nur oberflächlich in das bereits bestehende $SiO_2$-Gerüst des Gels eingebaut wird, wird das Alkylsilan B beim erfindungsgemäßen Verfahren auch im Inneren der $SiO_2$-Struktur eingebaut. Dies führt zu einer gleichmäßigeren und damit auch stabileren Struktur des Aerogels.

Als Tetraalkoxisilan A sind Verbindungen mit möglichst kleinem Alkylrest R1 bevorzugt, insbesondere natürlich TMOS. Aufgrund des physiologisch unbedenklicheren Ethanols als Hydrolyseprodukt können im technischen Verfahren auch die entsprechenden Ethoxisilane bevorzugt sein. Prinzipiell sind jedoch auch längere Alkylgruppen als Reste R1 geeignet. Entsprechendes gilt beim Alkylalkoxisilan B für die Auswahl der entsprechenden Reste R1.

Einen nur unwesentlichen Einfluß auf die Hydrolyse besitzt dagegen der hydrophobe Rest R2, der über Si-C gebunden ist. Dessen Auswahl wird im allgemeinen über die Verfügbarkeit des entsprechenden Silans B bestimmt, sollte jedoch im Hinblick auf sterische Komplikationen möglichst klein sein.

Im folgenden wird das erfindungsgemäße Verfahren, das damit erhaltene Aerogel sowie ein daraus hergestellter Ultraschallwandler anhand eines Ausführungsbeispiels und der Figur näher beschrieben. Die Figur zeigt einen schematischen Querschnitt durch einen Ultraschallwandler, der eine akustische Anpassungsschicht aus dem erfindungsgemäßen Aerogel trägt.

Zur Berechnung der benötigten Mengen der Reagenzien wird zunächst von den Reaktionsgleichungen für reines $SiO_2$-Aerogel ausgegangen:

$$Si(OR)_4 + n\,H_2O \xrightarrow{\text{Säure/Base}} Si(OH)_4(OR)_{4-n} + n\,ROH$$

$$2\,Si(OH)_n\,(OR)_{4-n} \longrightarrow (OR)_{4-n}(OH)_{n-1}Si-O-Si(OH)_n(OR)_{(4-n)-1} + ROH$$

bzw.

$$2Si(OH)_n(OR)_{4-n} \longrightarrow (OR)_{4-n}(OH)_{n-1}Si-O-Si(OH)_{n-1}\,(OR)^{4-n} + H_2O$$

$$Si(OH)_n(OR)_{4-n} + (OR)_{4-n}(OH)_{n-1}Si-O-Si(OH)_{n-1}(OR)_{4-n} \longrightarrow (OR)_{4-n}(OH)_{n-1}Si-O-(OR)_{4-n}(OH_{n-2}Si-O-Si(OH)_{n-1}(OR)_{4-n} + H_2O$$

und so weiter.

Es ergeben sich somit für eine vollständige Reaktion Mengen im Verhältnis von 1 Mol TMOS und 2 Mol $H_2O$. Die Hydrolyse wird durch Zufügen einer Base, in unserem Fall $NH_4OH$, in Gang gebracht.

Um einen Austausch der an der Oberfläche liegenden OH-Gruppen gegen organische Gruppen und somit einen hydrophoben Charakter des Gesamtmaterials zu erzeugen, werden nun 20 Prozent des verwendeten TMOS durch METMOS ersetzt. Es ergibt sich somit folgende Reaktionsgleichung:

$$4\,Si(OR)_4 + R-Si(OR)_3 + 10\,H_2O + n\,ROH \xrightarrow{\text{Säure/Base}} \text{"Alkogel"}$$

Der Anteil des zusätzlich hinzuzugebenden Methanols wird durch die gewünschte Zieldichte des Endmaterials festgelegt. Grundsätzlich gilt folgende Näherungsformel:

$$\rho = 60\,n / V_{ges}$$

mit

$$V_{ges} = V_{Si} + V_{H2} + V_{ROH}$$

mit

| | |
|---|---|
| $\rho$ | : Zieldichte |
| n | : eingesetzte Molmenge an Alkoxisilanen |
| 60 | : Molgewicht von $SiO_2$ |
| $V_{ges}$ | : Gesamtvolumen |
| $V_{Si}$ | : Gesamtvolumen der eingesetzten Alkoxisilane |
| $V_{H2O}$ | : Volumen des eingesetzten Wassers |
| $V_{ROH}$ | : Volumen des eingestzten Alkohols. |

Für ein hydrophobes Aerogel der Dichte um 300 kg/m$^3$ ergeben sich somit aus den oben angeführten Gleichungen folgende Molmengen:

| | |
|---|---|
| Methanol | ~ 3 Mol |
| TMOS | 4 Mol |
| METMOS | 1 Mol |
| $H_2O$ | 10 Mol |

Als Katalysator wird 0,1 n $NH_4OH$ verwendet, wobei der Wasseranteil der Ammoniaklösung bereits in den Ansatz miteingegangen ist.

Die Silane werden mit dem Methanol vermischt und anschließend die erforderliche Menge Ammoniaklösung zugegeben. Nach einer Pause, in der eine Vorkondensation stattfindet, wird die Lösung einem starken pulsierenden Ultraschallfeld ausgesetzt. In den Schallpausen wird das restliche (destillierte) Wasser in kleinen Mengen zugegeben. Möglich ist es auch, das übrige Wasser kontinuierlich mit geringer Einlaufgeschwindigkeit zuzusetzen.

Infolge des Ultraschallfeldes entsteht eine stabile Emulsion, in der bereits die Gelierung einsetzt. Dabei ist darauf zu achten, daß sich die Lösung nicht überhitzt und beispielsweise eine Temperatur von 30 Prozent nicht überschreitet, um ein vorzeitiges vollständiges Gelieren zu verhindern.
Nach der Zugabe des restlichen Wassers wird die Lösung in die Gelierformen abgefüllt. Nach ca. 10 bis 60 Minuten (je nach Stärke und Pulsart des verwendeten Ultraschallfelds) setzt die Gelierung ein.

Aus dem nassen Gel wird das durch Kondensation von SiOH-Gruppen freigesetzte Reaktionswasser mit Methanol ausgewaschen. Anschließend wird das Naßgel überkritisch getrocknet. Dazu wird es Bedingungen ausgesetzt, die oberhalb des kritischen Punktes des Lösungsmittels liegen, bei dem im Phasendiagramm zwischen Flüssigkeit und Dampf nicht mehr unterschieden werden kann. Für das hier vorliegende Methanol liegt der kritische Punkt bei ca. 240 °C und 81 bar Druck.

Möglich ist es auch, das Naßgel mit einem anderen Lösungsmittel auszuwaschen, dessen kritischer Punkt unterhalb der für Methanol erforderlichen Bedingungen liegt, beispielsweise gegen flüssiges $CO_2$. Dessen kritische Temperatur liegt bei 31,1 °C bei einem Druck von 73,9 bar (7,39 MPa). Aus dem Autoklaven wird nun durch ein Ventil die überkritische Flüssigkeit abgelassen und nach Abkühlung des Autoklaven schließlich das fertige Aerogel entnommen.

Nach den beschriebenen Bedingungen wird ein Aerogel erhalten, das eine Dichte von 280 bis 340 kg/m$^3$ besitzt. Sein je nach Beschallung und Zieldichte unterschiedlich ermittelter E-Modul liegt bei ca. 22 x $10^6$ kg/ms$^2$. Ebenso werden je nach Meßverfahren unterschiedliche Werte für den Poisson-Koeffizienten, die Schallgeschwindigkeit und die akustische Impedanz bestimmt. Der Poisson-Koeffizient liegt bei ca. 0,26, die Schallgeschwindigkeit bei ca. 315 m/s und die Impedanz bei ca. 0,98 x $10^5$ kg/m$^2$s. Das Aerogel ist mechanisch außergewöhnlich stabil und besitzt eine Temperaturbeständigkeit bis über 250 °C.

Zur Herstellung einer effektiven Impedanzanpassungsschicht für einen Ultraschallwandler wäre ein Material ideal, dessen akustische Impedanz Z folgender Gleichung gehorcht:

$$Z \approx (Z_P Z_L)^{1/2},$$

wobei $Z_P$ die Impedanz des Ultraschallwandlers und $Z_L$ die Impedanz von Luft ist. Eine Impedanzanpassung zwischen einer Piezokeramik fit $Z_P$ gleich 3 x $10^7$ kg/m$^2$s und Luft mit $Z_L$ gleich 418 kg/m$^2$s kann mit einer Aerogelanpassungsschicht mit Z ungefähr ≈ $10^5$ kg/m$^2$s erreicht werden, welches einer Dichte von ca. 300

kg $m^{-3}$ bei einer angenommenen Schallgeschwindigkeit von 333 m/s entspricht. Bei einer Resonanzfrequenz von ca. 100 kHz beträgt die erforderliche λ/4-Schichtdicke weniger als 1 mm. Für höhere Frequenzen ist die erforderliche Dicke noch geringer.

Für einen im genannten Frequenzbereich arbeitenden Ultraschallwandler wird eine erfindungsgemäß erhaltene Aerogelscheibe der genannten Dicke hergestellt und auf der Oberfläche des Ultraschallwandlers aufgebracht. Dazu kann ein sparsam aufzubringender Klebstoff verwendet werden.

Für eine breitbandige, verbesserte akustische Anpassung ist es vorteilhaft, die akustische Anpassung über mehrere Einzelschichten vorzunehmen, wobei jede Zwischenschicht eine Anpassungsschicht für die beiden benachbarten Schichten darstellt, so daß die Impedanzanpassung zwischen der Piezokeramik und der Luft in mehreren kleineren Schritten erfolgt.

Eine weitere Verbesserung stellt eine Impedanzanpassungsschicht dar, die einen von der Piezokeramik zur Luft hin abfallenden Impedanzgradienten aufweist. Für eine solche Schicht wird vorgeschlagen, die Aerogelschicht mit einem Temperaturgradienten zu sintern, wobei sich eine Verdichtung des Aerogels einstellt, die zu einer Impedanzerhöhung führt.

Die Figur zeigt einen einfachen Ultraschallwandler USW mit einer Impedanzanpassungsschicht IAS. Eine Piezokeramik ist beidseitig so mit Elektroden E1, 2 beschichtet, daß die Polarisationsrichtung der Piezokeramik P senkrecht zu den mit der Elektrode beschichteten Kristallflächen steht, welche auch die Abstrahlflächen des Ultraschallwandlers USW bilden. Direkt über einer Elektrodenschicht, die gegebenenfalls nicht ganzflächig über der Piezokeramik aufgebracht ist, wird nun eine Aerogelschicht mit einer wie oben angegeben berechneten Dicke und Impedanz aufgebracht. Ein mit einer solchen Impedanzschicht versehener Ultraschallwandler zeigt eine um bis zu 40 dB verbesserte Abstrahlleistung gegenüber einem Ultraschallwandler ohne Impedanzanpassungsschicht.

**Patentansprüche**

1. Verfahren zur Herstellung eines hydrophoben Aerogels mit den Schritten
   - Vorsehen eines Alkoxisilangemisches (A, B) im Verhältnis 22 : 1 bis 4 : 1

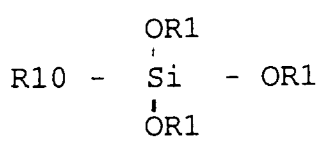

A

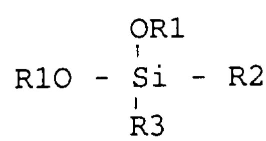

B

   wobei R1 ein Alkylrest mit 1 bis 6 C-Atomen ist, R2 ein hydrophober Rest, ausgewählt aus Alkyl oder Aryl ist und R3 für -OR1 oder R2 steht,
   - Zugabe eines zur Hydrolyse des Silangemisches ausreichenden Wassermenge und eines basischen Reagens,
   - Aussetzen der Lösung einem pulsierenden Ultraschallfeld und Gelierenlassen der Lösung,
   - Trocknen des so erhaltenen Naßgels bei überkritischen Bedingungen.

2. Verfahren nach Anspruch 1,
   bei dem zur Erniedrigung der Dichte des erhaltenen Aerogels die Silane A und B in einem Lösungsmittel verdünnt werden.

3. Verfahren nach Anspruch 2,
   bei dem als Lösungsmittel Methanol gewählt wird.

4. Verfahren nach einem der Ansprüche 1 bis 3,
   bei dem als Silan A Tetramethoxisilan und als Silan B Methyltrimethoxisilan gewählt wird.

5. Verfahren nach einem der Ansprüche 1 bis 4,
   bei dem für jede zu hydrolysierende Oxialkylgruppe 2 bis 3 Wassermoleküle zugegeben werden.

6. Verfahren nach einem der Ansprüche 1 bis 5, bei dem die Wasserzugabe in mehreren Schritten erfolgt.

7. Verfahren nach Anspruch 6, bei dem die erste Wasserzugabe zusammen mit dem erforderlichen basischen Reagens erfolgt und daß die übrigen Wasserzugaben unter kurzzeitiger Entfernung des Ultraschallfeldes erfolgt.

8. Verfahren nach einem der Ansprüche 1 bis 5, bei dem die Wasserzugabe kontinuierlich erfolgt.

9. Verfahren nach einem der Ansprüche 1 bis 8, bei dem das erhaltene Naßgel vor dem Trocknen mit Alkohol ausgewaschen wird und bei überkritischen Bedingungen bezüglich des Alkohols getrocknet wird.

10. Aerogel auf Siliziumdioxidbasis mit einer Dichte zwischen 280 und 340 $kg/m^3$, einer Impedanz zwischen 0,7 und 1,7 x $10^5$ $kg/m^2sec$, bei dem 4,5 bis 25 Prozent der Siliziumatome gleichmäßig über die gesamte Aerogelstruktur mit einer hydrophoben organischen Gruppe substituiert sind.

11. Verwendung des Aerogels als Impedanzanpassungsschicht auf einem Ultraschallwandler.

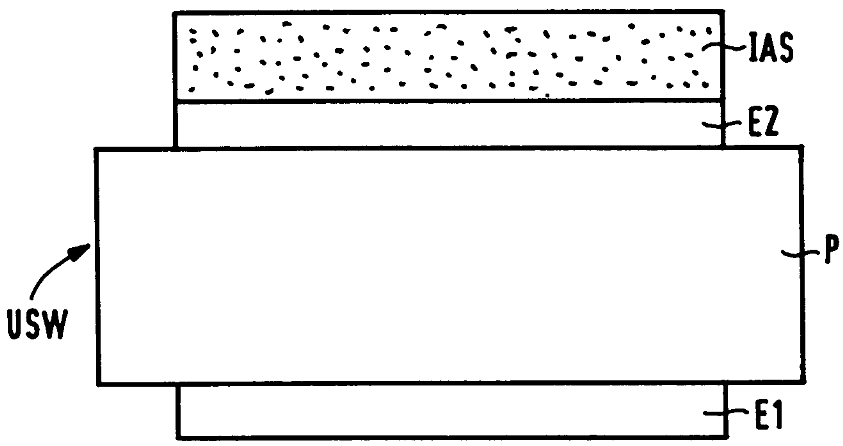
IAS
EZ
P
USW
E1

Europäisches Patentamt

# EUROPÄISCHER RECHERCHENBERICHT

Nummer der Anmeldung
EP 94 11 2388

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | DATABASE WPI<br>Week 9235,<br>Derwent Publications Ltd., London, GB;<br>AN 92-288975<br>& JP-A-4 198 238 (MATSUSHITA ELECTRIC WORKS LTD) 17. Juli 1992<br>* Zusammenfassung * | 1 | C01B33/158 |
| A | CHEMICAL ABSTRACTS, vol. 117, no. 18, 2. November 1992, Columbus, Ohio, US;<br>abstract no. 176551d,<br>SCHWERTFEGER ET AL 'hydrophobic aerogels from tetramethoxysilane/methyltrimethoxysilane mixtures'<br>Seite 319 ;<br>* Zusammenfassung *<br>& J. NON-CRYST. SOLIDS,<br>Bd.145, Nr.1-3, 1992<br>Seiten 85 - 89 | 1 | |
| A | EP-A-0 382 310 (ENICHEM S.P.A.)<br>* Ansprüche 1-4 * | 1 | RECHERCHIERTE SACHGEBIETE (Int.Cl.6)<br>C01B |
| A | WO-A-92 03378 (UNITED STATES DEPARTMENT OF ENERGY)<br>* Ansprüche 1-3 * | 1 | |

Der vorliegende Recherchenbericht wurde für alle Patentansprüche erstellt

| Recherchenort | Abschlußdatum der Recherche | Prüfer |
|---|---|---|
| BERLIN | 30. November 1994 | Clement, J-P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPO FORM 1503 03.82 (P04C03)